# EUROPÄISCHE PATENTANMELDUNG

(11) **EP 4 667 843 A1**
(43) Veröffentlichungstag der Anmeldung: **24.12.2025**
(21) Anmeldenummer: 24182652.8
(22) Anmeldetag: 17.06.2024
(51) Int. Cl.: F24F 13/24, F16L 55/033

(54) **SCHALLDÄMPFER FÜR EIN LUFTVERTEILSYSTEM**

(71) Anmelder: Viessmann Holding International GmbH, 35108 Allendorf (Eder) (DE)
(72) Erfinder: HANZ, Thomas, 56477 Rennerod (DE); HECKER, Sebastian, 6210 Sursee (CH)
(74) Vertreter: Clerc, Natalia

(57) **Zusammenfassung**

Ein Schalldämpfer für ein Luftverteilsystem weist ein äusseres Gehäuse (2, 5) und ein inneres Schalldämpfungselement (1) auf. Der Schalldämpfer weist zwei Resonatorkammern (61, 62, 63, 64) und einen Innenraum auf, der luftdurchströmbar ist. (61, 62, 63, 64) Das Schalldämpfungselement (1) weist mehrere Luftdurchlassöffnungen (110, 120, 130, 140) auf, die den Innenraum mit den mindestens zwei Resonatorkammern (61, 62, 63, 64) verbinden. Das Schalldämpfungselement (1) weist zwei Abschnitte (11, 12, 13, 14) auf, die einen Teil der Luftdurchlassöffnungen (110, 120, 130, 140) aufweisen. Mindestens ein Teil der Luftdurchlassöffnungen (110, 120, 130, 140) eines dieser zwei Abschnitte (11, 12, 13, 14) unterscheidet sich in der Form und/oder Grösse und/oder Anzahl und/oder Anordnung von den Luftdurchlassöffnungen (110, 120, 130, 140) des anderen dieser zwei Abschnitte (11, 12, 13, 14) und/oder die zwei Abschnitte (11, 12, 13, 14) sind modular zusammenfügbar. Der Schalldämpfer ermöglicht eine individuelle Anpassung an vorliegenden Geräuschspektren und ist auch in einem tiefen Frequenzbereich wirksam.

## Beschreibung

### TECHNISCHES GEBIET

Die vorliegende Erfindung betrifft einen Schalldämpfer für ein Luftverteilsystem, insbesondere einen Resonatorschalldämpfer und insbesondere für ein Luftverteilsystem einer zentralen Lüftungsanlage. Das Luftverteilsystem ist vorzugsweise in System eines Gebäudes, beispielsweise eine Heizbelüftung- und/oder Klimatisierungsanlage.

### STAND DER TECHNIK

Im Bereich der Lüftungstechnik werden zur Luftschalldämpfung mehrheitlich Absorptionsschalldämpfer verwendet. Absorptionsschalldämpfer enthalten poröses Material, beispielsweise Steinwolle, Glaswolle oder Glasfaser, das die Schallenergie teilweise absorbiert. Sie sind als Rohrschalldämpfer ausgebildet und bieten eine gute Einfügungsdämpfung im Frequenzbereich oberhalb 600 Hz. Die Einfügungsdämpfung ist die Abschwächung, d.h. die Dämpfung, eines Signals bzw. des Schalls während des Passierens durch ein Übertragungssystem, beispielsweise durch ein Bauteil.

Massgebende Geräuschquellen in der Lüftungstechnik sind Ventilatoren. Ihre dominierende Schallemission wird üblicherweise durch die aus Ventilatordrehzahl und Schaufelanzahl resultierende Schaufelpassierfrequenz, die meist im Frequenzbereich kleiner 350 Hz liegt, bestimmt. Die bekannten rohrförmigen Absorptionsschalldämpfer zeigen in diesem Frequenzbereich jedoch kaum Wirkung. Sie müssen deshalb einen langen Schalldämpferweg, eine hohe Packungsstärke und/oder Schalldämpferkulissen aufweisen. Diese Massnahmen benötigen jedoch relativ viel Platz. Zudem beeinflussen sie den Druckverlust.

Ferner sind reaktive Schalldämpfer bekannt, die hauptsächlich durch Schallreflexion und/oder Flächenänderung und/oder Kammern eine Dämpfung erreichen. Reaktive Schalldämpfer, die als Resonatoren wirken, werden auch Resonatorschalldämpfer genannt.

EP0 039 727 B1 offenbart einen Schalldämpfer zum Einbau in eine Rohrleitung, durch die ein Strömungsmittel strömt. Der Schalldämpfer weist reaktive, d.h. nicht-dissipative, und/oder absorbierende, d.h. dissipative, Schalldämpfmittelelemente auf. Die Schalldämpfungselemente sind aufrechtstehend und in einem Abstand zueinander in Zeilen oder Reihen in einem Gehäuse angeordnet. Auch CN 206401024 U verwendet eine Kombination von reaktiven und absorbierenden Schalldämpfungselementen.

DE 196 47 425 A1 beschreibt einen Akustikresonator zur Schalldämpfung in einer Rohrleitung einer Heizbelüftung- und Klimatisierungsanlage (HVAC-Anlage). Er weist eine Honigwabenverkleidung auf, um Schall bei höheren Frequenzen abzuschwächen. Durch Verwendung von mehreren Kammern, die eine gemeinsame grosse Kammer bilden, soll eine Geräuschdämpfung für niedrige Frequenzen erhalten werden.

US 6 668 970 B1 beschreibt einen reaktiven Schalldämpfer in einem HVAC-System, der eine Schrägfläche aufweist, an der der Schall reflektiert werden kann.

EP 1 117 965 B1 offenbart einen reaktiven Schalldämpfer für Lüftungskanäle mit einer Schalldämpfungskammer, die in zwei Kammerteile aufgeteilt ist. Die Kammerteile sind über Rohre, die eine Teilungswand durchdringen, miteinander verbunden.

### DARSTELLUNG DER ERFINDUNG

Es ist eine Aufgabe der Erfindung, einen verbesserten Schalldämpfer für ein Luftverteilsystem zu schaffen.

Diese Aufgabe löst ein Schalldämpfer mit den Merkmalen des Patentanspruchs 1 bzw. 2.

Der erfindungsgemässe Schalldämpfer für ein Luftverteilsystem weist ein äusseres Gehäuse und ein inneres Schalldämpfungselement auf. Der Schalldämpfer bildet mindestens zwei, vorzugsweise mehrere, Resonatorkammern aus. Der Schalldämpfer weist einen Innenraum auf, der luftdurchströmbar ist. Das Schalldämpfungselement weist mehrere Luftdurchlassöffnungen auf, die den Innenraum mit den mindestens zwei Resonatorkammern verbinden. Das Schalldämpfungselement weist mindestens einen ersten Abschnitt und einen zweiten Abschnitt auf.

In einer Verwirklichung der Erfindung weist der erste Abschnitt und der zweite Abschnitt je mindestens eine Luftdurchlassöffnung auf und der erste Abschnitt sowie der zweite Abschnitt sind modular zusammenfügbar. Der erste und der zweite Abschnitt weisen je nach Ausführungsform lediglich eine Luftdurchlassöffnung zur zugehörigen Resonatorkammer auf.

In einer alternativen Verwirklichung der Erfindung weist der erste Abschnitt mehrere der Luftdurchlassöffnungen auf und/oder der zweite Abschnitt weist mehrere der Luftdurchlassöffnungen auf. Mindestens ein Teil der Luftdurchlassöffnungen des ersten Abschnitts unterscheidet sich in der Form und/oder Grösse und/oder Anzahl und/oder Anordnung von den Luftdurchlassöffnungen des zweiten Abschnitts.

Vorzugsweise ist in beiden Verwirklichungen jeder Abschnitt, der mindestens eine Luftdurchgangsöffnung aufweist, einer eigenen Resonatorkammer zugeordnet.

Vorzugsweise sind mehr als zwei Abschnitte und mehr als zwei Resonatorkammern vorhanden. Die Zuordnung der Abschnitte und der Resonatorkammern ist vorzugsweise eineindeutig.

Der erfindungsgemässe Schalldämpfer verwendet somit für die Schalldämpfung das Resonatorprinzip.

Die dämpfende Wirkung des erfindungsgemässen Schalldämpfers ist für unterschiedliche Gegebenheiten und vorliegende Geräuschspektren optimiert bzw. individuell optimierbar.

Diese Optimierung wird entweder durch die unterschiedlich ausgebildeten Abschnitte erzielt oder durch die Veränderung der Länge oder Zusammensetzung des Schalldämpfers dank seiner modularen Bauweise oder durch beide Massnahmen gemeinsam.

Der Schalldämpfer weist vorzugsweise einen Einlass und einen Auslass auf, die eine Hauptströmungsrichtung definieren. Es können auch mehrere Ein- und/oder Auslässe vorhanden sein, die gemeinsam eine Hauptströmungsrichtung definieren. Die Abschnitte sind vorzugsweise in Hauptströmungsrichtung hintereinander oder nebeneinander angeordnet.

Die unterschiedlichen Abschnitte ermöglichen die Ausbildung von unterschiedlich wirkenden Resonatoren entlang oder quer zu einer Hautströmungsrichtung durch den Schalldämpfer. Jeder Abschnitt ist vorzugsweise zur Dämpfung eines speziellen Frequenzbereichs ausgebildet. Die Abschnitte können entsprechend beschriftet sein, um dies für den Benutzer einfach erkennbar zu machen.

Dank des Hintereinanderschaltens der Abschnitte und deren Resonatorkammern lässt sich ein breitbandiger bzw. ein für mehrere gezielte Frequenzebereiche wirksamer Schalldämpfer schaffen.

Die modulare Bauweise ermöglicht es, Abschnitte zu verwenden, die auf eine Gegebenheit und vorliegenden Geräuschspektren optimal angepasst sind. Vorzugsweise sind diese einzelnen Abschnitte bestimmten Frequenzbändern zugeordnet.

Soll beispielsweise Schall mit mehrheitlich tiefen Frequenzen gedämpft werden, so können Abschnitte mit entsprechend optimierten Luftdurchlassöffnungen eingesetzt werden. Soll Schall mit bestimmten hohen und tiefen Frequenzen gedämpft werden, so lässt sich ein Abschnitt mit entsprechend optimieren Luftdurchlassöffnungen für die Dämpfung von hohen Frequenzen und ein anderer Abschnitt mit entsprechend optimierten Öffnungen für die Dämpfung von tiefen Frequenzen verwenden. Die Reihenfolge dieser Abschnitte lässt sich wählen. Es lassen sich auch zwei oder mehrere identisch ausgebildete Abschnitte hintereinander anordnen.

Der erfindungsgemässe Schalldämpfer lässt sich somit mit guter Einfügungsdämpfung im tiefen und mittleren Frequenzbereich ausbilden. Er lässt sich gezielt auf eine bestehende Geräuschsituation abstimmen. Ist er modular zusammensetzbar, lässt er sich zudem auf einfache Art und Weise vor Ort auf eine aktuelle Geräuschsituation anpassen. Insbesondere kann er in verschiedenen Zusammensetzungen der Abschnitte vor Ort ausprobiert und dann in der als bestmöglich erkannten Zusammensetzung der Abschnitte verwendet werden. Des Weiteren kann der Hersteller mit denselben Grundelementen unterschiedlich wirkende Schalldämpfer zusammenstellen. Dies verringert die Herstellungskosten.

Der Schalldämpfer lässt sich zudem äusserst kompakt ausbilden. Im Falle einer modularen Zusammensetzung müssen nur diejenigen Abschnitte verwendet werden, die die gewünschte Dämpfung erzielen. Abschnitte für Frequenzbereiche, die nicht auftreten oder die keiner Dämpfung bedürfen, können weggelassen werden.

Durch Trennung von Gehäuse, bzw. Aussenrohr, und Schalldämpfungselement, bzw. Innenrohr, lässt sich der Schalldämpfer einfach reinigen. Vorzugsweise lässt sich das Innenrohr aus dem Aussenrohr herausschieben. Die Rohre können einen runden oder einen eckigen Querschnitt aufweisen.

Die körperlich einfache Ausbildung des Schalldämpfers ermöglicht eine kostengünstige Herstellung.

In einigen Ausführungsformen umgibt das Schalldämpfungselement den Innenraum. Vorzugsweise ist das Schalldämpfungselement ein Rohrabschnitt oder es ist aus mehreren modular zusammenfügbaren Rohrabschnitten gebildet.

In anderen Ausführungsformen ist das Schalldämpfungselement vom Innenraum umgeben.

Vorzugsweise sind mehr als zwei Abschnitte in Hauptströmungsrichtung hintereinander angeordnet, wobei mindestens ein Teil der mehr als zwei Abschnitte einen Teil der Luftdurchlassöffnungen aufweist. Es können somit auch Abschnitte vorhanden sein, die keine Luftdurchlassöffnungen aufweisen und die somit keinen Luftdurchlass vom Hauptströmungskanal im Inneren des Schalldämpfungselements in die mindestens eine Resonatorkammer ausbilden. Beispielsweise sind am Anfang und am Ende der Resonatorkammer Abschnitte mit Luftdurchgangsöffnungen angeordnet und im mittleren Bereich sind keine Durchlassöffnungen vorhanden.

Vorzugsweise unterscheidet sich mindestens ein Teil der Luftdurchlassöffnungen eines jeden dieser Abschnitte in der Form und/oder Grösse und/oder Anzahl und/oder Anordnung von den Luftdurchlassöffnungen der anderen Abschnitte. Vorzugsweise ist somit jeder Abschnitt einem bestimmten Frequenzbereich zugeordnet.

Vorzugsweise sind zwischen dem Gehäuse und dem Schalldämpfungselement Trennelemente angeordnet, die sich senkrecht zur Hauptströmungsrichtung erstrecken. Diese erhöhen die Stabilität der Vorrichtung. Vorzugsweise trennen die Trennelemente den Zwischenraum zwischen Gehäuse und Schalldämpfungselement in mehrere Resonatorkammern.

Das Schalldämpfungselement kann einen beliebigen Querschnitt aufweisen. Vorzugsweise ist der Querschnitt jedoch rund oder eckig. Vorzugsweise bleibt er über die gesamte Länge entlang der Hauptströmungsrichtung gleich.

Das Gehäuse kann einen beliebigen Querschnitt aufweisen. Vorzugsweise ist er jedoch rund oder eckig, insbesondere dann, wenn das Gehäuse ein einziges Schalldämpfungselement umgibt.

Der Schalldämpfer kann als reiner reaktiver, d.h. nicht-dissipativer, Dämpfer ausgebildet sein, insbesondere als reiner schalldämpfender Resonator. Ein Vorteil dieser Ausführungsformen ist, dass sie sich faserfrei ausbilden lassen. Dies ist für die Hygiene vorteilhaft.

In anderen Ausführungsformen weist mindestens einer der Abschnitte ein schallabsorbierendes Element auf. Der Schalldämpfer ist in diesen Fällen eine Kombination eines reaktiven und eines absorbierenden, d.h. dissipativen, Dämpfers. Beispielsweise ist das schallabsorbierende Element ein poröses Material, das am oder im Abschnitt angeordnet ist. Das Material ist beispielsweise Steinwolle, Glaswolle oder Glasfaser. Das schallabsorbierende Element absorbiert den Schall mindestens teilweise. Dieser Abschnitt kann ausschliesslich absorbierend wirken oder ebenfalls mit Luftdurchlassöffnungen versehen sein, die in die Resonatorkammer führen. Durch diese Kombination mit einem Absorberelement lässt sich die Wirkung des Schalldämpfers auf den hochfrequenten Bereich erweitern.

Das Schalldämpfungselement kann als integrales Bauteil ausgebildet sein. In bevorzugten Ausführungsformen ist weist es jedoch mindestens zwei Abschnitte auf, die modular zusammenfügbar sind. Diese Abschnitte sind vorzugsweise mittels Verbindungselementen, vorzugsweise mittels Klemm- oder Schnappverbindungen, miteinander verbindbar.

In einer Ausführungsform sind die Abschnitte des Schalldämpfungselements aneinander fixierbar, vorzugsweise durch Klemm- oder Schnappverbindungen, und anschliessend in das Gehäuse einbringbar.

In anderen, bevorzugten Ausführungsformen sind die modular zusammenfügbaren Abschnitte des Schalldämpfungselement von je einem Abschnitt des Gehäuses umgeben.

Vorzugsweise bildet jeder modular zusammenfügbare Abschnitt des Schalldämpfungselements mit seinem zugehörigen Abschnitt des Gehäuses eine Einheit, so dass der Schalldämpfer durch Zusammensetzen der Einheiten modular zusammenfügbar ist. Dies erleichtert die Zusammensetzung und das Ausprobieren von Kombinationen der Abschnitte vor Ort.

Die oben genannten Verbindungen, insbesondere die Klemm- oder Schnappverbindungen, sind vorzugsweise zerstörungsfrei lösbar. Es lassen sich beispielsweise Verbindung verwenden, wie sie in EP 3 995 728 A1 beschrieben sind. Dies insbesondere, wenn der Schalldämpfer rohrförmig ausgebildet ist.

In einigen Ausführungsformen, insbesondere im Falle eines rohrförmigen Schalldämpfers, ist nur ein Schalldämpfungselement vorhanden, das vom Gehäuse umgeben ist.

In anderen Ausführungsformen sind mehrere Schalldämpfungselemente vorhanden, die in einem gemeinsamen Gehäuse angeordnet sind. Je nach Ausführungsform sind die einzelnen Schalldämpfungselemente innerhalb des Gehäuses durch luftdichte Wände getrennt angeordnet. Je nach Ausführungsform sind sie jeweils einem eigenen Ein- und/oder Ausgang aus dem Gehäuse verbunden, wobei jeder Ein- bzw. Ausgang des Gehäuses nur einem einzigen Schalldämpfungselement oder einem Teil der Gesamtheit aller Schalldämpfungselemente zugeordnet ist. In anderen Ausführungsformen sind die einzelnen Schalldämpfungselemente einem gemeinsamen Eingang des Gehäuses und/oder einem gemeinsamen Ausgang des Gehäuses zugeordnet.

In einigen Ausführungsformen münden die Eingänge bzw. mündet der Eingang des Gehäuses in eine vorgelagerte Kammer des Gehäuses, bevor der Strömungsweg in die einzelnen Schalldämpfungselemente führt.

Alternativ oder zusätzlich ist zwischen den Auslassöffnungen der einzelnen Schalldämpfungselemente und den Ausgängen bzw. dem Ausgang eine Kammer des Gehäuses angeordnet, bevor der Strömungsweg in den mindestens einen Ausgang des Gehäuses führt.

In einigen Ausführungsformen ist der Schalldämpfer ein Rohrschalldämpfer zur Verbindung mit einem Lüftungsrohr oder Teil eines Luftauslassrohr oder eines Lufteinlassrohrs.

In einigen Ausführungsformen ist das Gehäuse ein Gehäuse eines Luftverteilkastens, eines Lufteinlasskastens oder eines Luftauslasskastens ist. Somit ist der entsprechende Kasten mit eine oder mit mehreren Schalldämpfungselementen versehen. Vorteilhaft ist, dass der Kasten modulartig aufgebaut werden kann. Ferner lässt er sich dank der Verwendung von Resonatorschalldämpfern mit einer kurzen Baulänge und somit platzsparend ausbilden. Je nach Ausführungsform ist die Resonatorkammer durch Volumina gebildet, die die einzelnen Schalldämpfungselemente umgeben und/oder durch einen Innenraum, der zwischen dem Hauptanschlussstutzen des Gehäuses und den Schalldämpfungselementen liegt. Der Hauptanschlussstutzen bilden die Eingangs- oder die Ausgangsöffnung des Gehäuses.

Ein Luftverteilkasten, der mit mindestens einem Schalldämpfungselement versehen ist, wobei der Luftverteilkasten mindestens eine Resonatorkammer ausbildet oder aufweist, wird hiermit als separate Erfindung beansprucht. Dieser erfindungsgemässe Luftverteilkasten eines Luftverteilsystems weist ein Gehäuse auf, wobei im Gehäuse mindestens ein Schalldämpfungselement und mindestens eine Resonatorkammer angeordnet sind. Das Schalldämpfungselement bildet einen Innenraum aus, der luftdurchströmbar ist und eine Hauptströmungsrichtung definiert. Das Schalldämpfungselement weist mehrere Luftdurchlassöffnungen auf, die entlang der Hauptströmungsrichtung angeordnet sind und die den Innenraum mit der Resonatorkammer verbinden. In bevorzugten Ausführungsformen weist dieser Luftverteilkasten die oben erwähnten Merkmale einzeln oder in Kombination miteinander auf, ohne zwingend die unterschiedlich ausgebildeten Abschnitte oder den modularen Aufbau aufzuweisen.

Lässt sich das Gehäuse 5 öffnen, so ist die Wartung erleichtert. Der Innenraum des Gehäuses lässt sich einfach reinigen. Das mindestens eine Schalldämpfungselement 1 lässt sich dadurch ebenfalls einfach auswechseln und/oder reinigen.

Resonatorschalldämpfer weisen eine kleine kompakte Bauweise, einen faserfreien Aufbau und eine gute Wirksamkeit im unteren und mittleren Frequenzbereich auf. Sie lassen sich zudem mit breitbandiger Wirkung gestalten. Sie lassen sich ferner mit einem Schallabsorber und/oder einem Filter kombinieren. Sie sind zudem kostengünstig.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine schematische perspektivische Darstellung eines erfindungsgemässen Schalldämpfers in einer ersten Ausführungsform;
- Figur 2: eine Seitenansicht des Schalldämpfers gemäss Figur 1;
- Figur 3: einen Querschnitt durch A-A gemäss Figur 2;
- Figur 4: einen Längsschnitt durch B-B gemäss Figur 2;
- Figur 5: eine schematische perspektivische Darstellung eines erfindungsgemässen Schalldämpfers in einer zweiten Ausführungsform;
- Figur 6: einen Längsschnitt durch den Schalldämpfer gemäss Figur 5;
- Figur 7: eine schematische perspektivische Darstellung eines erfindungsgemässen Schalldämpfers in einer dritten Ausführungsform,
- Figur 8: eine schematische perspektivische Darstellung eines erfindungsgemässen Schalldämpfers in einer vierten Ausführungsform;
- Figur 9: einen Längsschnitt durch den Schalldämpfer gemäss Figur 8;
- Figur 10: einen Längsschnitt durch B-B gemäss Figur 9;
- Figur 11: eine schematische perspektivische Darstellung einer Einheit mit einem Schalldämpfereinheit in einer ersten Ausführungsform;
- Figur 12: eine schematische perspektivische Darstellung einer Einheit mit mehreren Schalldämpferelementen in einer zweiten Ausführungsform;
- Figur 13: eine Seitenansicht der Schalldämpfereinheit gemäss Figur 12;
- Figur 14: einen Querschnitt durch A-A gemäss Figur 12 und
- Figur 15: einen Längsschnitt durch B-B gemäss Figur 12.

### BESCHREIBUNG BEVORZUGTER AUSFÜHRUNGSFORMEN

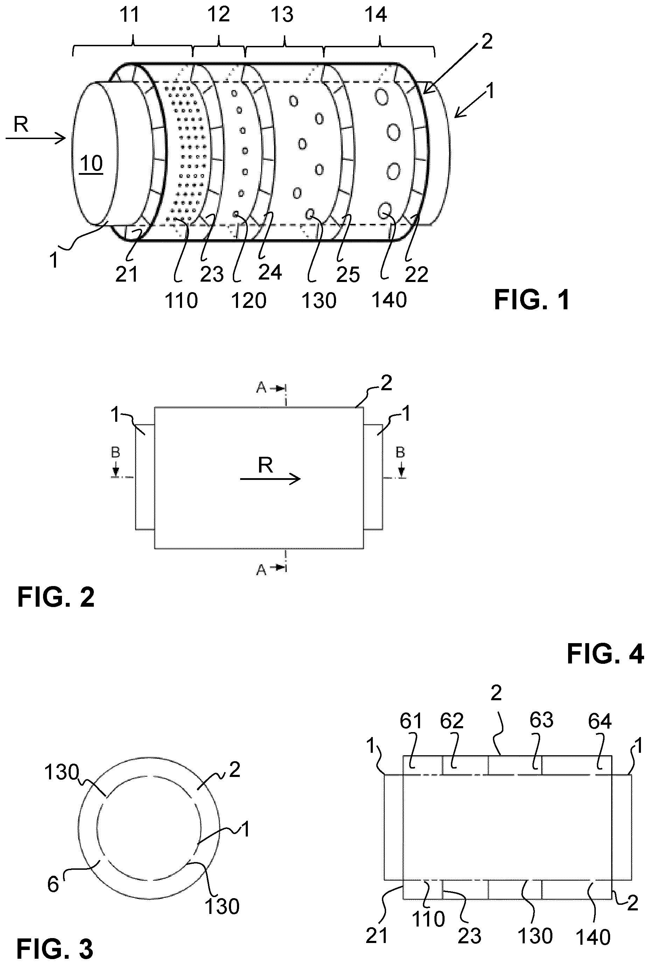

In den Figuren 1 bis 4 ist ein erstes Ausführungsbeispiels des erfindungsgemässen Schalldämpfers für ein Luftverteilsystem dargestellt. Es ist ein Rohrschalldämpfer, insbesondere eines Systems eines Gebäudes, beispielsweise einer Heizbelüftung- und/oder Klimatisierungsanlage.

Der Schalldämpfer weist ein Schalldämpfungselement 1 auf, das von einem Gehäuse 2 umgeben ist. vorzugsweise ragt mindestens ein Ende der Schalldämpfungselements 1 stirnseitig aus dem Gehäuse 2 heraus und steht diesem vor. Vorzugsweise stehen beide Enden des Schalldämpfungselements 1 dem Gehäuse 2 stirnseitig vor. Dies erleichtert die Ankopplung an die weiteren Bauteile, insbesondere an die Rohre, des Luftverteilverteilsystems. Die Stirnseiten des Gehäuses 2 sind mit den Bezugszeichen 21 und 22 versehen. Diese Stirnseiten 21, 22 sind vorzugsweise luftdicht verschlossen.

Das Schalldämpfungselement 1 ist rohrförmig ausgebildet, vorzugsweise mit einem runden Querschnitt, der über die gesamte Länge des Schalldämpfungselements 1 gleich gross bleibt.

Das Schalldämpfungselement 1 bildet einen Innenraum aus, der luftdurchströmbar ist. Der Innenraum ist ein Hauptströmungskanal 10, der vom ersten stirnseitigen und offenen Ende des Schalldämpfungselements 1 zum zweiten stirnseitigen und offenen Ende des Schalldämpfungselements 1 verläuft. Der Kanal 10 ist Teil des Luftverteilkanals, der durch die übrigen Bauteile des Luftverteilsystems gebildet wird. Der Hauptströmungskanal 10 definiert eine Hauptströmungsrichtung R für die durchströmende Luft. Diese Richtung R ist in den Figuren mit zwei Pfeilen dargestellt.

Das Gehäuse 2 ist ebenfalls rohrförmig mit gleichbleibenden, vorzugsweise rundem, Querschnitt. Sein Innendurchmesser ist jedoch grösser als der Aussendurchmesser des Schalldämpfungselements 1, so dass es das Schalldämpfungselement 1 in einem Abstand umgibt.

Trennelemente 23, 24, 25 verbinden die Innenfläche des Gehäuses 2 mit der Aussenfläche des Schalldämpfungselements 1. Die Trennelemente 23, 24, 25 sind in Hauptströmungsrichtung R in einem Abstand voneinander hintereinander angeordnet. Die Trennelemente 23, 24, 25 sind je nach Ausführungsbeispiel radial verlaufende Streben, wobei der Zwischenraum zwischen Streben desselben Trennelements 23, 24 25 frei ist oder mit einem luftdurchlässigen Material gefüllt ist. Vorzugsweise sind die Trennelemente 23, 24, 24 einfache Netze, mit oder ohne radial verlaufende Streben.

Das Schalldämpfungselement 1 weist mindestens zwei, hier vier Abschnitte 11, 12, 13, 14 auf. Diese sind in Hauptströmungsrichtung hintereinander und aneinander angrenzend angeordnet. Mindestens ein Teil der Abschnitte 11, 12, 13, 14, vorzugsweise alle Abschnitte weisen Luftdurchlassöffnungen 110, 120, 130, 140 auf. Vorzugsweise unterscheiden sich mindestens zwei, vorzugsweise alle Abschnitte 11, 12, 13, 14 in der Art der Durchgangsöffnungen 110, 120, 130, 140, sei es durch die Form, die Grösse, die Anzahl oder die Anordnung der Durchgangsöffnungen 110, 120, 130, 140.

In Figur 1 nimmt der Durchmesser der einzelnen Durchgangsöffnungen 110, 120, 130, 140 in Strömungsrichtung zu. Andere Anordnungen sind jedoch ebenfalls möglich.

Die Trennelemente 23, 24, 25 befinden sich an den Übergängen der einzelnen Abschnitte 11, 12, 13, 14, wie dies in den Figuren 1 und 4 gut erkennbar ist, und grenzen somit die Abschnitte 11, 12, 13, 14 voneinander ab.

Der Zwischenraum 6 zwischen dem Gehäuse 2 und dem Schalldämpfungselement 1 bildet Resonatorkammern 61, 62, 63, 64 aus, die ferner durch die zwei geschlossenen Stirnseiten 21, 22 des Gehäuses 2 begrenzt ist. Dies ist in den Figuren 1 und 3 gut erkennbar.

Die Trennelemente 23, 24, 25 unterteilt den Zwischenraum 6 in vier Resonatorkammern 61, 62, 63, 64, die jede einem Abschnitt 11, 12, 13, 14 des Schalldämpfungselements 1 zugeordnet ist, d.h. diesen Abschnitt 11, 12, 13, 14 umgibt. Dies ist in den Figuren 1 und 4 gut erkennbar.

Die Abschnitte 11, 12, 13, 14 sind in diesem Beispiel Teile eines einteiligen Rohrs. Das Schalldämpfungselement 1 und das Gehäuse 2 sind vorzugsweise aus einem Kunststoff oder aus einem Metall, beispielsweise Stahl oder Aluminium, gefertigt. Vorzugsweise sind beide aus demselben Material gefertigt. Sie können jedoch auch jedes aus einem anderen Material bestehen.

Der Schalldämpfer ist somit als Resonator ausgebildet mit unterschiedlich wirkenden Resonatorabschnitten.

Luft, die durch den Hauptströmungskanal 10 in den Schalldämpfer hineinströmt, gelangt teilweise durch die Luftdurchlassöffnungen 110, 120, 130, 140 der einzelnen Abschnitte 11, 12, 13, 14 in die entsprechenden Resonatorkammern. Dies führt zu einer Schalldämpfung, die je nach Ausbildung der einzelnen Abschnitte 11, 12, 13, 14 bestimmte Schallfrequenzen oder Schallfrequenzbereich bevorzugt dämpft.

Das Beispiel gemäss den Figuren 1 bis 4 ist ein reiner reaktiver Schalldämpfer ohne schallabsorbierende Materialien. Er lässt sich deshalb faserfrei ausbilden.

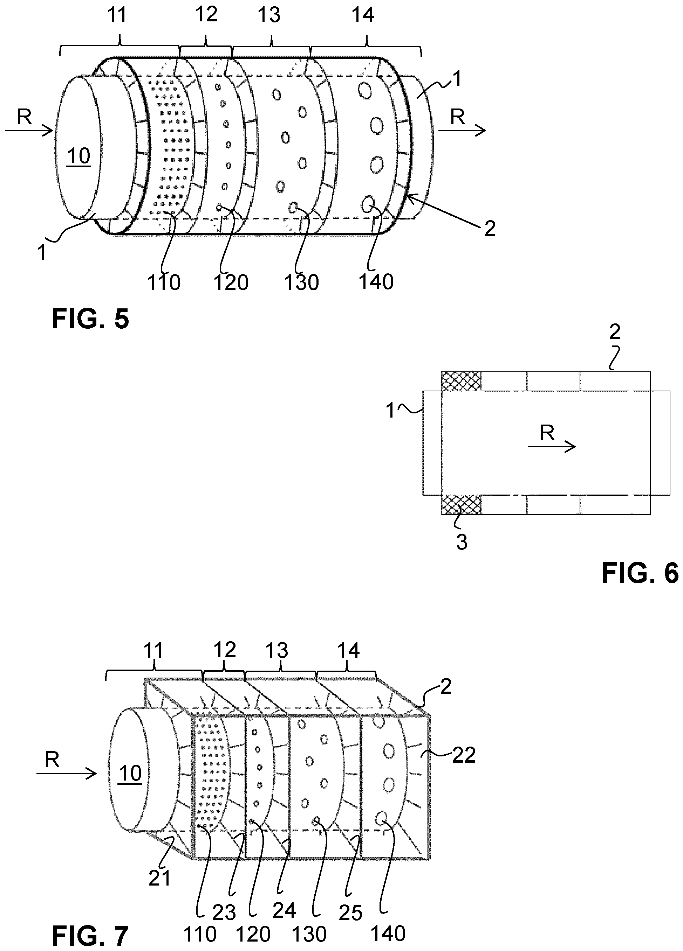

Das Ausführungsbeispiel gemäss den Figuren 5 und 6 ist, wie der Vergleich zwischen den Figuren 1 und 5 zeigt, identisch ausgebildet wie das erste Beispiel. Es weist jedoch ein Absorberelement 3 auf. Es ist, wie in Figur 6 erkennbar ist, um den ersten Abschnitt 11 angeordnet. In Figur 5 ist es nicht dargestellt. Es ist vorzugsweise in bekanntes dissipatives Element aus einem porösen Material, wie beispielsweise Steinwolle, Glaswolle oder Glasfaser.

Alternativ kann das Absorberelement 3 auch an der Innenwandung des ersten Abschnitts 11 angeordnet sein oder den inneren Querschnitt des ersten Abschnitts ganz ausfüllen. Des Weiteren kann es anstatt am ersten Abschnitt 11 oder zusätzlich zum ersten Abschnitt 11 an oder in einem anderen Abschnitt 12, 13, 14 angeordnet sein.

Alternativ oder zusätzlich zum Absorberelement 3 lassen sich auch Filter verwenden, die in der Hauptströmungsrichtung am oder im Schalldämpfungselement 1 angeordnet werden.

Das Ausführungsbeispiel gemäss Figur 7 unterscheidet sich von den zwei vorherigen Beispielen darin, dass das Gehäuse 2 eine rechteckigen, vorzugsweise einen quadratischen Querschnitt aufweist. Das Schalldämpfungselement 1 weist nach wie vor einen runden Querschnitt auf. Ferner ragt das Schalldämpfungselement 1 nur an einem Stirnende aus dem Gehäuse 2 heraus. In anderen Ausführungsformen ist nur einer dieser zwei Unterscheide zu den vorherigen Beispielen verwirklicht, d.h. die quadratische Form oder das einseitige Herausragen.

In den bisher beschriebenen Ausführungsbeispielen sind einzelnen Abschnitte 11, 12, 13, 14 gemeinsam einteilig ausgebildet oder nicht zerstörungsfrei lösbar miteinander verbunden. Dasselbe gilt für einzelne Abschnitte des Gehäuses 2. Vorzugsweise ist auch das Gehäuse 2 nicht zerstörungsfrei mit den Schalldämpfungselement 1 verbunden. Die Verbindungen sind vorzugsweise Verbindungen mittels Kleben oder Schweissen.

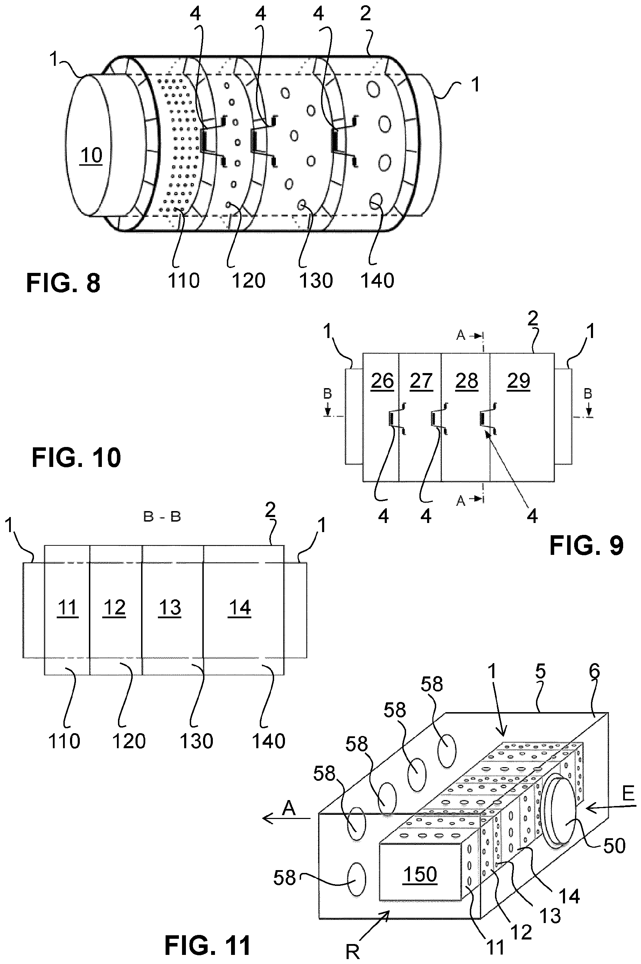

Das Ausführungsbeispiel gemäss den Figuren 8 bis 10 ist modular aufgebaut. In einer Ausführungsform sind die Abschnitte 11, 12, 13, 14 des Schalldämpfungselements 1 als einzelne Bauteile ausgebildet, die sich miteinander verbinden lassen. Vorzugsweise sind sie lösbar miteinander verbindbar. Die Verbindung erfolgt beispielsweise mittels Steckverbindungen oder mittels Klamm- oder Schnappverbindungen. Das so zusammengesetzte Schalldämpfungselement 1 lässt sich anschliessend in das Gehäuse 2 einbringen.

In diesem Beispiel ist jedoch der Schalldämpfer gesamthaft abschnittsweise ausgebildet. D.h. jeder Abschnitt 11, 12, 13, 14 des Schalldämpfungselements 1 ist von einem entsprechenden Abschnitt 26, 27, 28, 29 des Gehäuses 2 umgeben. Dies ist durch den Vergleich der Figuren 9 und 10 gut erkennbar.

Die einzelnen Abschnitte 26, 27, 28, 29 und somit der darin befindlichen Abschnitte 11, 12, 13, 14 des Schalldämpfungselements 1 lassen sich mittels Verbindungselementen 4 miteinander verbinden. Die Verbindung ist vorzugsweise lösbar, um neue Kombinationen der Abschnitte zu ermöglichen. Die Verbindungselemente 4 können Steckelemente sein, die an den Abschnitten des Gehäuses 2 und/oder des Schalldämpfungselements 1 angeformt oder angebracht sind. Sie können jedoch auch Klemm- oder Schnappverbindungen sein, die ebenfalls durch angeformte Elemente gebildet sind oder die Drittelemente sind. In den Figuren dargestellt ist eine Klammer, wie sie in EP 3 995 728 A1 beschrieben ist. Alternativ lassen sich auch die einzelnen Abschnitte 11, 12, 13, 14 mittels der in EP 3 995 728 A1 beschriebenen oder alternativen Verbindungselementen verbinden und in ein gemeinsames Aussenrohr einsetzen.

Die oben beschriebenen Rohrschalldämpfer lassen sich beispielsweise in Rohren, jedoch auch in Lufteinlass- oder Luftauslassrohren mit Tellerventilen einsetzen.

Das Ausführungsbeispiel gemäss Figur 11 zeigt einen Luftverteilkasten mit integrierten Schalldämpfungselementen 1. Der Luftverteilkasten weist ein äusseres Gehäuse 5 auf. Das Gehäuse ist üblicherweise aus einem Metall, beispielsweise Stahl oder Aluminium, gebildet. Es kann jedoch auch aus Kunststoff gefertigt sein. Das Gehäuse 5 weist vorzugsweise die Form eines Quaders oder Kubus auf. Andere Formen sind jedoch auch möglich. Es weist in diesem Beispiel eine Eingangsöffnung 50 und mehrere Ausgangsöffnungen 58 auf. Die Eingangsöffnung 50 ist in Seite angeordnet, die Ausgangsöffnungen 58 auf der gegenüberliegenden Seite. Die Ausgangsöffnungen 58 können jedoch auch in einer winkligen Anordnung zur Eingangsöffnung 50 angeordnet sein. Zudem können in diesem und im nachfolgenden Beispiel die Eingangsöffnung als Ausgang und die Ausgangsöffnung als Eingang verwendet werden.

Das Schalldämpfungselement 1 ist vorzugsweise vollständig vom Gehäuse 5 umschlossen. Der Innenraum 150 des Schalldämpfungselements 1 bildet Resonatorkammern aus, die auf den Schall im Luftverteilkasten einwirken.

Das Schalldämpfungselement 1 weist wiederum mehrere, in Hauptströmungsrichtung hintereinander angeordnete Abschnitte auf, wobei lediglich die ersten Abschnitte mit den Bezugszeichen 11, 12, 13 und 14 bezeichnet sind. Die Abschnitte sind je nach Ausführungsform alle unterschiedlich ausgebildet. Sie können sich jedoch beispielsweise auch in ihrer Ausgestaltung wiederholen, wie in der Figur 11 dargestellt ist. Beispielsweise ist der vierte Abschnitt 14 gleich ausbildet wie der erste Abschnitt 11.

Der Zwischenraum 6 ist durch die äussere Oberfläche des Schalldämpfungselements 1 und der inneren Oberfläche des Gehäuses 5 gebildet. Er lässt sich ähnlich wie in den vorherigen Beispielen durch Trennelemente in Resonatorkammern unterteilen, die luftdicht voneinander getrennt sind.

Das Schalldämpfungselement 1 gemäss Figur 7 ist je nach Ausführungsform als nicht trennbares Bauteil ausgebildet oder es ist modulartig zusammensetzbar. Vorzugsweise ist es als zusammengebautes Bauteil in das Gehäuse 5 einbringbar. Vorzugsweise weist es die dargestellte quaderförmige Ausbildung aus. Es lässt sich jedoch auch rohrförmig mit rundem Querschnitt oder in einer anderen Form ausbilden.

Das Schalldämpfungselement 1 gemäss Figur 7 weist eine Hauptströmungsrichtung R auf, die senkrecht zur Einströmungsrichtung E und/oder Auströmungsrichtung A in bzw. aus dem Gehäuse 5 verläuft. Ferner ist lediglich ein einziges Schalldämpfungselement 1 vorhanden. Es können jedoch auch mehr als ein Schalldämpfungselement 1 in dieser Anordnung eingesetzt sein.

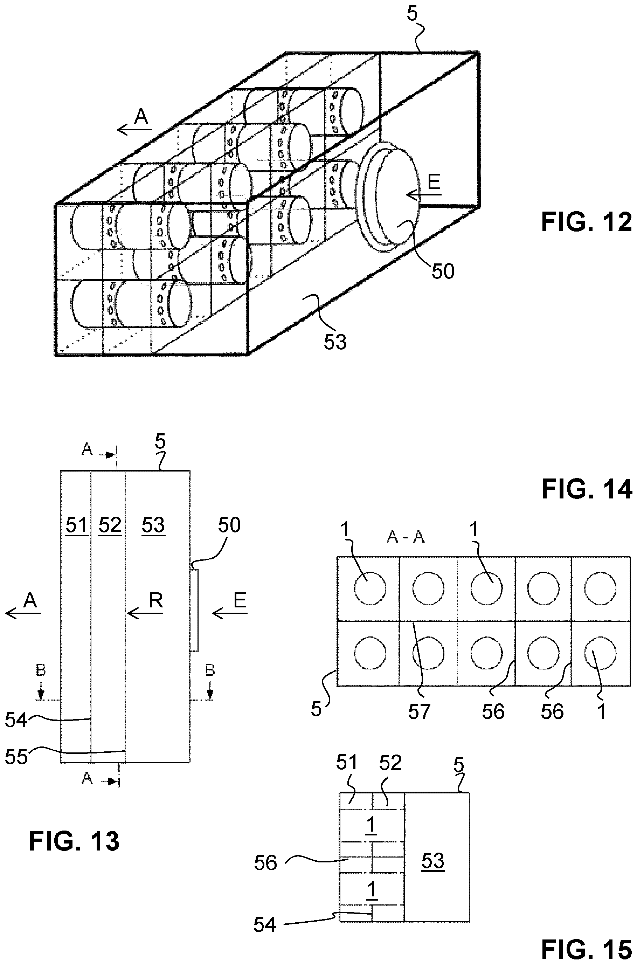

Im Ausführungsbeispiel gemäss den Figuren 12 bis 15 sind mehrere Schalldämpfungselemente 1 in einem gemeinsamen Gehäuse 5 angeordnet. Auch diese Vorrichtung ist vorzugsweise ein Luftverteilkasten eines Luftverteilsystems.

Die Schalldämpfungselemente 1 sind in diesem Beispiel in zwei übereinander liegenden Reihen angeordnet. Es kann auch nur eine Reihe oder eine einzige Kolonne sein oder es können mehr als zwei Reihen und weniger oder mehr als die dargestellten vertikalen Kolonnen sein.

Die Schalldämpfungselemente 1 sind in diesem Beispiel rohrförmig ausgebildet. Sie können jedoch auch einen rechteckigen Querschnitt oder eine andere Form aufweisen. Sie sind vorzugsweise derart angeordnet, dass sie eine gemeinsame Hauptströmungsrichtung R definieren. Diese Hauptströmungsrichtung R verläuft vorzugsweise parallel zur Einströmungsrichtung E und/oder Auströmungsrichtung A durch die Eingangsöffnung 50 bzw. die Ausgangsöffnungen 58 des Gehäuses 5.

Die Schalldämpfungselemente 1 sind wie die bereits beschriebenen ausgebildet. Sie sind jeweils modular zusammensetzbar sein oder sie sind bereits als Einheit vorgefertigt.

In einigen Ausführungsformen sind die Schalldämpfungselemente 1 an sich modular zusammensetzbar und in das Gehäuse 5 einbringbar.

In einer einfachen Ausführungsform sind die modular zusammengesetzten oder als jeweilige Einheit ausgebildeten Schalldämpfungselemente 1 in einem gemeinsamen, ungeteilten Innenraum des Gehäuses 5 angeordnet. Der Innenraum bildet die Resonatorkammer oder einen Teil der Resonatorkammer aus.

In anderen Ausführungsformen sind sie einzeln oder in Gruppen in Zwischenräume 51, 52 des Gehäuses 5 einbringbar. Die Zwischenräume 51, 52 sind je nach Ausführungsform durch erste und zweite Trennwände 54, 55 voneinander getrennt, die luftdicht sind. Der Bereich der Kammern zwischen den Wänden und den darin angeordneten Abschnitten der Schalldämpfungselementen 1 bilden Zwischenräume aus. Dritte Trennwände 56 unterteilen die Zwischenräume jedes Schalldämpfungselements 1 in Resonatorkammern, die in Hauptströmungsrichtung R hintereinander angeordnet sind und jeweils einem Abschnitt des Schalldämpfungselements 1 zugeordnet sind.

Die Zwischenräume 51, 52 und Resonatorkammern lassen sich als Einheit ausbilden oder sie lassen sich modular zusammensetzen.

Vorzugsweise ist ein modularer Aufbau verwendet, wie er in Figur 8 dargestellt ist, d.h. es sind modular zusammensetzbare Abschnitte bestehend aus einem Abschnitt eines Schalldämpfungselements 1 und einem Abschnitt des Gehäuses 5 vorhanden. Wie in Figur 13 gezeigt, lässt sich auch ein Gehäuseabschnitt mit einer Zeile von nebeneinander angeordneten Schalldämpfungsabschnitten 1 zu einem einzigen Modul ausbilden. Dasselbe gilt für übereinander in einer Kolonne angeordneten Schalldämpfungsabschnitten 1.

Vorzugsweise weisen die Abschnitte des Gehäuses 5 einen rechteckigen, vorzugsweise einen quadratischen Querschnitt auf. Dies erleichtert das Zusammensetzen der einzelnen Module.

Die Enden der Schalldämpfungselemente 1 können den Gehäuseabschnitten vorstehen oder sie fluchten mit den Wänden der Gehäuseabschnitte.

Vorzugsweise ist zwischen den Ausgängen der Schalldämpfungselementen 1 und der gemeinsamen Ausgangsöffnung 58 des Gehäuses 5 ein Raum 53 vorhanden, der ebenfalls eine Resonatorkammer ausbildet. Dies ist in den Figuren 12 und 15 gut erkennbar.

Vorzugsweise ist es in allen Ausführungsformen möglich, das Schalldämpferelement 1 und je nach Ausführungsform die einzelnen Abschnitte des Schalldämpferelements 1 einzeln zu entnehmen, so dass sie ersetzt und/oder gereinigt werden können.

Der erfindungsgemässe Schalldämpfer ermöglicht auf einfache Art und Weise eine individuelle Abstimmung auf vorliegende Geräuschspektren und ist auch in tiefen Frequenzbereichen wirksam. In den meisten Ausführungsformen ermöglicht er zudem eine einfache Reinigung und/oder Ersatz des Schalldämpfungselements.

### BEZUGSZEICHENLISTE

- 1: inneres Schalldämpfungselement
- 10: Hauptströmungskanal
- 11: erster Abschnitt
- 110: erste Durchlassöffnungen
- 12: zweiter Abschnitt
- 120: zweite Durchlassöffnungen
- 13: dritter Abschnitt
- 130: dritte Durchlassöffnungen
- 14: vierter Abschnitt
- 140: vierte Durchlassöffnungen
- 150: Innenraum

- 2: Gehäuse
- 21: erste Stirnseite
- 22: zweite Stirnseite
- 23: erstes Trennelement
- 24: zweites Trennelement
- 25: drittes Trennelemente
- 26: erster Abschnitt
- 27: zweiter Abschnitt
- 28: dritter Abschnitt
- 29: vierter Abschnitt

- 3: Absorberelement

- 4: Verbindungselement

- 5: Gehäuse
- 50: Eingangsöffnung
- 51: erster Zwischenraum
- 52: zweiter Zwischenraum
- 53: Raum
- 54: erste Trennwand
- 55: zweite Trennwand
- 56: dritte Trennwand
- 57: vierte Trennwand
- 58: Ausgangsöffnung

- 6: Zwischenraum
- 61: erste Resonatorkammer
- 62: zweite Resonatorkammer
- 63: dritte Resonatorkammer
- 64: vierte Resonatorkammer

- A: Ausströmungsrichtung
- E: Einströmungsrichtung
- R: Hauptströmungsrichtung
- M1: erstes Modulteil
- M2: zweites Modulteil
- M3: drittes Modulteil
- M4: viertes Modulteil

## Patentansprüche

1. Schalldämpfer für ein Luftverteilsystem,
wobei der Schalldämpfer ein äusseres Gehäuse (2, 5) und ein inneres Schalldämpfungselement (1) aufweist,
wobei der Schalldämpfer mindestens zwei Resonatorkammern (61, 62, 63, 64) ausbildet,
wobei der Schalldämpfer einen Innenraum aufweist, der luftdurchströmbar ist, und
wobei das Schalldämpfungselement (1) mehrere Luftdurchlassöffnungen (110, 120, 130, 140) aufweist, die den Innenraum mit den mindestens zwei Resonatorkammern (61, 62, 63, 64) verbinden,
**dadurch gekennzeichnet,**
**dass** das Schalldämpfungselement (1) mindestens einen ersten Abschnitt (11, 12, 13, 14) und einen zweiten Abschnitt aufweist,
**dass** der erste Abschnitt (11, 12, 13, 14) und der zweite Abschnitt (11, 12, 13, 14) je mindestens eine Luftdurchlassöffnung (110, 120, 130, 140) aufweisen und
**dass** der erste Abschnitt (11, 12, 13, 14) und der zweite Abschnitt (11, 12, 13, 14) modular zusammenfügbar sind.

2. Schalldämpfer für ein Luftverteilsystem,
wobei der Schalldämpfer ein äusseres Gehäuse (2, 5) und ein inneres Schalldämpfungselement (1) aufweist,
wobei der Schalldämpfer mindestens zwei Resonatorkammern (61, 62, 63, 64) ausbildet,
wobei der Schalldämpfer einen Innenraum aufweist, der luftdurchströmbar ist, und
wobei das Schalldämpfungselement (1) mehrere Luftdurchlassöffnungen (110, 120, 130, 140) aufweist, die den Innenraum mit den mindestens zwei Resonatorkammern (61, 62, 63, 64) verbinden,
**dadurch gekennzeichnet,**
**dass** das Schalldämpfungselement (1) mindestens einen ersten Abschnitt (11, 12, 13, 14) und einen zweiten Abschnitt aufweist,
**dass** der erste Abschnitt (11, 12, 13, 14) mehrere der Luftdurchlassöffnungen (110, 120, 130, 140) aufweist und der zweite Abschnitt (11, 12, 13, 14) mehrere der Luftdurchlassöffnungen aufweist, und
**dass** sich mindestens ein Teil der Luftdurchlassöffnungen (110, 120, 130, 140) des ersten Abschnitts (11, 12, 13, 14) in der Form und/oder Grösse und/oder Anzahl und/oder Anordnung von den Luftdurchlassöffnungen (110, 120, 130, 140) des zweiten Abschnitts (11, 12, 13, 14) unterscheidet.

3. Schalldämpfer nach einem der Ansprüche 1 oder 2, wobei der Schalldämpfer mindestens einen Einlass und mindestens einen Auslass aufweist, die eine Hauptströmungsrichtung (R) definieren und wobei der erste Abschnitt (11, 12, 13, 14) und der zweite Abschnitt (11, 12, 13, 14) in Hauptströmungsrichtung (R) hintereinander oder nebeneinander angeordnet sind.

4. Schalldämpfer nach einem der Ansprüche 1 bis 3, wobei das Schalldämpfungselement (1) den Innenraum umgibt.

5. Schalldämpfer nach Anspruch4, wobei zwischen dem Gehäuse (2, 5) und dem Schalldämpfungselement (1) mindestens ein Trennelement (23, 24, 25) angeordnet ist, das sich senkrecht zur Hauptströmungsrichtung (R) erstreckt und die mindestens zwei Resonatorkammern (6, 61, 62, 63, 64) voneinander trennt.

6. Schalldämpfer nach einem der Ansprüche 1 bis 5, wobei mehr als zwei Abschnitte (11, 12, 13, 14) vorhanden sind und wobei mindestens ein Teil der Abschnitte (11, 12, 13, 14) einen Teil der Luftdurchlassöffnungen (110, 120, 130, 140) aufweist und wobei jeder der Abschnitte (11, 12, 13, 14), der Durchlassöffnungen (110, 120, 130, 140) aufweist, einer eigenen Resonatorkammer (61, 62, 63, 64) zugeordnet ist.

7. Schalldämpfer nach einem der Ansprüche 1 bis 6, wobei das Schalldämpfungselement (1) einen runden oder einen eckigen Querschnitt aufweist und/oder das Gehäuse (2, 5) einen runden oder einen eckigen Querschnitt aufweist.

8. Schalldämpfer nach einem der Ansprüche 1 bis 7, wobei mindestens einer der Abschnitte (11, 12, 13, 14) ein schallabsorbierendes Element (3) aufweist.

9. Schalldämpfer nach einem der Ansprüche 1 bis 8, wobei das Schalldämpfungselement (1) mindestens zwei Abschnitte (11, 12, 13, 14) aufweist, die modular zusammenfügbar sind.

10. Schalldämpfer nach Anspruch 9, wobei die Abschnitte (11, 12, 13, 14) mittels Verbindungselementen miteinander verbindbar sind.

11. Schalldämpfer nach einem der Ansprüche 9 oder 10, wobei die modular zusammenfügbaren Abschnitte (11, 12, 13, 14) des Schalldämpfungselement (1) von je einem Abschnitt (26, 27, 28, 29, 51, 52) des Gehäuses (2, 5) umgeben sind.

12. Schalldämpfer nach Anspruch 11, wobei jeder modular zusammenfügbare Abschnitt (11, 12, 13, 14) des Schalldämpfungselements (1) mit seinem zugehörigen Abschnitt (26, 27, 28, 29, 51, 52) des Gehäuses (2, 5) eine Einheit bildet, so dass der Schalldämpfer durch Zusammensetzen der Einheiten modular zusammenfügbar ist.

13. Schalldämpfer nach einem der Ansprüche 1 bis 12, wobei mehrere Schalldämpfungselemente (1) vorhanden sind, die in einem gemeinsamen Gehäuse (5) angeordnet sind, wobei das Gehäuse (5) vorzugsweise ein Gehäuse (5) eines Luftverteilkastens, eines Lufteinlasskastens oder eines Luftauslasskastens ist.

14. Schalldämpfer nach einem der Ansprüche 1 bis 12, wobei der Schalldämpfer ein Rohrschalldämpfer zur Verbindung mit einem Lüftungsrohr ist oder Teil eines Luftauslassrohr oder eines Lufteinlassrohrs ist und wobei das Schalldämpfungselement (1) vorzugsweise ein Rohrabschnitt oder mehrere hintereinander angeordnete Rohrabschnitte sind.

15. Luftverteilkasten eines Luftverteilsystems, wobei der Luftverteilkasten ein Gehäuse (5) aufweist, wobei im Gehäuse (5) mindestens ein Schalldämpfungselement (1) und mindestens eine Resonatorkammer angeordnet sind, wobei das Schalldämpfungselement (1) einen Innenraum ausbildet, der luftdurchströmbar ist und eine Hauptströmungsrichtung (R) definiert, und wobei das Schalldämpfungselement (1) mehrere Luftdurchlassöffnungen (110, 120, 130, 140) aufweist, die entlang der Hauptströmungsrichtung (R) angeordnet sind und die den Innenraum mit der Resonatorkammer verbinden.
